# EUROPÄISCHE PATENTSCHRIFT

(11) **EP 3 557 342 B1**
(45) Veröffentlichungstag und Bekanntmachung des Hinweises auf die Patenterteilung: **27.05.2020**
(21) Anmeldenummer: 18168024.0
(22) Anmeldetag: 18.04.2018
(51) Int. Cl.: G05B 19/04, G05B 19/05

(54) **VERFAHREN ZUR PROGRAMMIERUNG EINER STEUERUNG**
METHOD FOR PROGRAMMING A CONTROL UNIT
PROCÉDÉ DE PROGRAMMATION D'UNE COMMANDE

(43) Veröffentlichungstag der Anmeldung: 23.10.2019
(73) Patentinhaber: SICK AG, 79183 Waldkirch (DE)
(72) Erfinder: Nolte, Christoph, 79108 Freiburg (DE)
(74) Vertreter: Manitz Finsterwald Patent- und Rechtsanwaltspartnerschaft mbB

(56) Entgegenhaltungen:
- DE-A1-102007 039 425
- DE-A1-102008 043 683
- US-A1- 2011 153 036

## Beschreibung

Die vorliegende Erfindung betrifft ein Verfahren, bei welchem eine zentrale Steuerung und eine untergeordnete Steuerung zusammenwirken. Dabei wird eine Programmierung der zentralen und/oder untergeordneten Steuerung vorgenommen.

Ein Verfahren gemäß dem Oberbegriff von Anspruch 1 ist der DE 10 2007 039 425 A1 zu entnehmen. Die DE 10 2008 043 683 A1 beschreibt eine Datenübermittlung durch Feldgeräte. Die US 2011/153036 A1 lehrt eine Datenstruktur für Feldgeräte.

Das Zusammenwirken einer zentralen Steuerung und einer untergeordneten Steuerung wird beispielsweise beim Automatisieren von industriellen Prozessen verwendet, um z.B. eine Fertigungsstraße oder eine andere industrielle Anlage zu steuern. Dabei werden zur Datenkommunikation zwischen der zentralen Steuerung und der untergeordneten Steuerung üblicherweise Feldbusse verwendet, die eine Datenkommunikation zwischen den Steuerungen ermöglichen.

Beispielsweise kann die untergeordnete Steuerung mit verschiedenen Sensoren, Schaltern und dergleichen gekoppelt sein, mit welchen der industrielle Prozess erfasst wird. Die von den Sensoren erfassten Daten können dann von der untergeordneten Steuerung an die zentrale Steuerung übermittelt werden, wodurch die zentrale Steuerung in die Lage versetzt wird, den industriellen Prozess zu überwachen und zu steuern.

Zur Übermittlung der von den Sensoren erfassten Daten verwendet die untergeordnete Steuerung z.B. ein Prozessdatenabbild. Um das Prozessdatenabbild korrekt verarbeiten zu können, muss der zentralen Steuerung bekannt sein, auf welche Art und Weise die von der untergeordneten Steuerung erfassten Daten in dem Prozessdatenabbild übermittelt werden. Hierzu muss in bekannten Systemen manuell eine Anpassung der zentralen Steuerung an das jeweilige Prozessdatenabbild vorgenommen werden. Nachteiligerweise ist eine solche manuelle Anpassung zeitaufwendig, fehleranfällig und damit kostenintensiv.

Es ist daher die der Erfindung zugrundeliegende Aufgabe, ein Verfahren anzugeben, welches das Zusammenwirken einer zentralen Steuerung und einer untergeordneten Steuerung vereinfacht.

Diese Aufgabe wird durch ein Verfahren gemäß Anspruch 1 und eine Verarbeitungsmaschine gemäß Anspruch 11 gelöst.

Das erfindungsgemäße Verfahren dient also insbesondere der Programmierung der untergeordneten Steuerung und/oder der zentralen Steuerung. Die Feldbusverbindung zwischen der zentralen Steuerung und der untergeordneten Steuerung kann dabei durch ein Feldbusnetzwerk bereitgestellt werden. An das Feldbusnetzwerk können auch weitere untergeordnete Steuerungen angeschlossen sein, die mit der zentralen Steuerung auf die hierin beschriebene Art und Weise zusammenarbeiten. Die unterschiedlichen untergeordneten Steuerungen können mittels unterschiedlicher Feldbusse und/oder unterschiedlicher Feldbusprotokolle mit der zentralen Steuerung verbunden sein.

Durch die Programmierung der untergeordneten Steuerung kann die untergeordnete Steuerung insbesondere als Feldgerät eingesetzt werden. Dies bedeutet, die untergeordnete Steuerung kann sich gegenüber der zentralen Steuerung wie ein für Feldgeräte üblicher Sensor, Aktor und dergleichen verhalten. Die untergeordnete Steuerung kann dementsprechend Prozessdaten mittels des Prozessdatenabbilds liefern, die denjenigen Prozessdaten eines solchen Sensors oder Aktors entsprechen. Zur Übermittlung des Prozessdatenabbilds sendet die untergeordnete Steuerung bevorzugt Datagramme an die zentrale Steuerung, welche jeweils das Prozessdatenabbild enthalten.

In Abhängigkeit der Programmierung der untergeordneten Steuerung können die Prozessdaten in dem Prozessdatenabbild unterschiedlich aufgebaut und/oder angeordnet sein. Dieser Aufbau und/oder diese Anordnung spiegeln sich dann jeweils in der Syntax wieder. Anhand der Syntax können die Prozessdaten des Prozessdatenabbilds dann ohne Weiteres verarbeitet, d.h. z.B. interpretiert, gespeichert und/oder verrechnet, werden.

In dem Prozessdatenabbild können z.B. Daten verschiedener Sensoren und/oder Aktoren enthalten sein, beispielsweise Druck, Temperatur und/oder Geschwindigkeitswerte. Die jeweiligen Sensoren und/oder Aktoren, welche diese Daten erfassen, können jeweils an die untergeordnete Steuerung mittels einer Datenverbindung angeschlossen sein.

Erfindungsgemäß wird es durch die in der Gerätebeschreibung enthaltene Syntax des Prozessdatenabbilds ermöglicht, dass eine maschinenlesbare Beschreibung des Prozessdatenabbilds vorliegt, wodurch wiederum eine manuelle Eingabe des Prozessdatenabbilds (z.B. durch die Eingabe von Variablen-Tabellen) an der zentralen Steuerung entfallen kann. Stattdessen kann erfindungsgemäß die Syntax verwendet werden, um z.B. die Programmierung der zentralen Steuerung so anzupassen, dass das Prozessdatenabbild von der zentralen Steuerung verarbeitet werden kann. Die Anpassung der Programmierung kann z.B. automatisch oder teilweise automatisiert erfolgen. Der zeitaufwendige Prozess der manuellen Eingabe von z.B. Strukturinformationen oder Tabellen von Variablen kann daher entfallen. Dies ist insbesondere bei der Neuentwicklung von industriellen Systemen von Vorteil, bei welchen sich die Programmierung der untergeordneten Steuerung häufig ändert, wobei sich mit der geänderten Programmierung der untergeordneten Steuerung auch das Prozessdatenabbild verändert. Auf eine solche Veränderung hin muss dann nicht jedes Mal manuell eine Anpassung der zentralen Steuerung erfolgen. Hierdurch ermöglicht die Erfindung eine deutliche Zeit- und Kostenersparnis. Zudem werden Fehler bei der manuellen Anpassung der zentralen Steuerung vermieden.

Unter einer Programmierung ist insbesondere zu verstehen, dass kompilierter Quellcode, d.h. ausführbarer Code, auf eine Steuerung übertragen wird und von der Steuerung ausgeführt wird.

Vorteilhafte Weiterbildungen der Erfindung sind der Beschreibung, den Figuren sowie den Unteransprüchen zu entnehmen.

Gemäß einer ersten vorteilhaften Ausführungsform umfasst die Syntax des Prozessdatenabbilds die Position und/oder den Namen und/oder den Typ von in dem Prozessdatenabbild enthaltenen Variablen. Auch eine Richtung kann in der Syntax umfasst sein. Die Richtung kann z.B. angeben ob eine Variable gelesen und/oder geschrieben (read/write) werden soll. Das Prozessdatenabbild kann allgemein Variablen nutzen, um Informationen zu übertragen. Bei den Variablen kann es sich um verschiedene Datentypen handeln, wobei grundsätzlich sämtliche in der Norm IEC 61131-3 genannten Datentypen möglich sind. Beispiele hierfür sind Bitstrings wie BYTE, WORD, DWORD, LWORD, Integer wie SINT, INT, DINT, LINT, USINT, UINT, UDINT, ULINT, Fließkomme-Werte, wie REAL und LREAL, Zeiten wie TI-ME, LTIME, DATE, LDATE, TIME_OF_DAY, DATE, LDATE, TIME_OF_DAY, LTlME_OF_DAY, Zeichenketten wie CHAR, WCHAR, STRING, WSTRING und benutzerdefinierte und zusammengesetzte Datentypen wie Enum, Arrays, Structs, References und so weiter.

Unter der Position der Variablen ist die Position in dem Prozessdatenabbild und/oder in einem Datagramm zu verstehen. Dies bedeutet, dass beispielsweise an erster Position eine Variable des Typs Byte, an zweiter Position eine Variable des Typs INT und an dritter Position eine Variable des Typs DATE in dem Prozessdatenabbild enthalten sein kann.

Überdies können die Variablen mit einem Namen versehen sein, beispielsweise kann der im obigen Beispiel an zweiter Position stehende INT-Wert den Namen "Temperatur" tragen, so dass bei der Verwendung der Syntax dann klar wird, dass hierbei ein Temperaturwert übertragen wird.

Es versteht sich, dass die vorstehend genannten Variablen jeweils als Platzhalter innerhalb des Prozessdatenabbilds dienen, wobei die tatsächlich übertragenen Prozessdatenabbilder jeweils dann z.B. einen aktuellen Messwert umfassen.

Gemäß einer weiteren vorteilhaften Ausführungsform wird die Gerätebeschreibung in einer Gerätebeschreibungsdatei gespeichert und übertragen, wobei die Gerätebeschreibungsdatei beispielsweise eine GDSML-Datei, eine EDS-Datei, eine ESI-Datei oder eine GSD-Datei ist. Die jeweils verwendete Gerätebeschreibungsdatei kann von dem verwendeten Feldbus bzw. verwendeten Feldbusprotokoll abhängen. So kann beispielsweise als Feldbus der PROFINET-Feldbus verwendet werden, wobei dann die Gerätebeschreibung mittels der Generic Station Description Markup Language (GSDML) erfolgt, welche in der oben erwähnten GDSML-Datei gespeichert sein kann. Wird hingegen der Feldbus EtherNET/IP verwendet, kann eine EDS-Datei als Gerätebeschreibungsdatei genutzt werden. Für den Feldbus EtherCAT wird die ESI-Datei und für den Feldbus PROFIBUS die GSD-Datei genutzt.

Die Syntax des Prozessdatenabbilds kann bevorzugt derart in die Gerätebeschreibung integriert sein, dass eine Abwärts-Kompatibilität erhalten bleibt. Beispielsweise basiert das GDSML-Format auf einer Markup-Sprache, so dass hier zusätzliche Tags eingeführt werden können, die die Syntax beschreiben.

Die Gerätebeschreibung kann zudem z.B. eine Geräte-Identifikation, eine Gerätefamilie, einen Hersteller und/oder einen Namen der untergeordneten Steuerung umfassen.

Erfindungsgemäß wird die Programmierung der zentralen Steuerung automatisch oder teilweise automatisch an die Syntax des Prozessdatenabbilds angepasst. Das Verwenden der Syntax kann dementsprechend umfassen, dass die Syntax dazu verwendet wird, die Programmierung der zentralen Steuerung so zu verändern, dass die zentrale Steuerung die Daten des Prozessdatenabbilds sinnvoll verarbeiten kann. Wenn beispielsweise die Syntax eine neue Reihenfolge der übermittelten Prozessdaten angibt, kann die Programmierung der zentralen Steuerung an die neue Reihenfolge angepasst werden. Ergibt sich z.B., dass ein Temperaturwert, welcher bisher als Integer übertragen wurde, nun als Fließkommawert übertragen wird, so kann die Programmierung dahingehend geändert werden, dass eine Datenkonversion des Fließkommawerts hin zu einem Integer-Wert stattfindet. Eine derartige Anpassung der Programmierung kann bevorzugt automatisch erfolgen. Hierdurch wird der Programmieraufwand deutlich gesenkt. Zudem wird eine erhöhte Flexibilität der zentralen Steuerung beim Einsatz ermöglicht.

Gemäß einer weiteren vorteilhaften Ausführungsform umfasst die untergeordnete Steuerung eine SPS im Slave-Betrieb, ein programmierbares Gateway, einen programmierbaren Sensor und/oder einen Industrie-PC mit einer Feldbusschnittstelle. Die untergeordnete Steuerung zeichnet sich bevorzugt durch die Möglichkeit einer flexiblen Programmierung aus, d.h. je nach Programmierung können unterschiedlich Prozessdatenabbilder ausgegeben und an die zentrale Steuerung übertragen werden.

Grundsätzlich ist es auch möglich, dass die zentrale Steuerung und die untergeordnete Steuerung aus identischer oder ähnlicher Hardware aufgebaut sind, wobei die jeweilige Programmierung der Steuerung dann das hierin beschriebene Verhalten der zentralen bzw. untergeordneten Steuerung erzeugt.

Unter einer speicherprogrammierbaren Steuerung ist bevorzugt ein Gerät zu verstehen, welches in industriellen Prozessen eingesetzt wird und welches Ein- und Ausgänge umfasst, die zur Kopplung mit Sensoren und Aktoren vorgesehen sind. Insbesondere kann es sich bei einer SPS auch um eine sichere Steuerung handeln, welche sich durch redundante Baugruppen für die Ein- und Ausgänge und/oder bei einem Prozessor auszeichnet.

Erfindungsgemäß erfolgt das Generieren der Gerätebeschreibung automatisch oder zumindest teilweise automatisch, insbesondere basierend auf der Programmierung der untergeordneten Steuerung. Hierzu kann beispielsweise der Code der Programmierung der untergeordneten Steuerung nach der Übermittlung von Ausgabedaten (Outputs) durchsucht werden, wobei diese Outputs dann in der Syntax der Gerätebeschreibung wiedergegeben werden. Insbesondere kann auch das gesamte Verfahren automatisch durchgeführt werden.

Gemäß einer weiteren vorteilhaften Ausführungsform wird die Gerätebeschreibung nach einer Änderung der Programmierung der untergeordneten Steuerung neu erzeugt. Auch die Neuerzeugung der Gerätebeschreibung kann bevorzugt automatisch erfolgen. Damit kann bei einer Änderung der Programmierung der untergeordneten Steuerung eine neue Syntax erzeugt werden, die wiederum mittels der Gerätebeschreibung die zentrale Steuerung anpassen kann, so dass auch nach einer Änderung an der Programmierung der untergeordneten Steuerung eine Verarbeitung der Daten der untergeordneten Steuerung mittels der zentralen Steuerung weiterhin möglich bleibt.

Gemäß einer weiteren vorteilhaften Ausführungsform wird das Generieren der Gerätebeschreibung mittels eines Engineering-Tools durchgeführt, welches bevorzugt auf einem an dem Feldbus angeschlossenen Engineering-System ausgeführt wird. Bei einem Engineering-Tool kann es sich um ein Softwareprogramm handeln, welches dazu eingerichtet ist, eine Programmierung der zentralen Steuerung und/oder der untergeordneten Steuerung vorzunehmen. Das Engineering-Tool kann hierzu eine im Engineering-Tool vorgenommene Programmierung auf die zentrale Steuerung und/oder die untergeordnete Steuerung übertragen. Das Engineering-Tool kann auf einem Personal Computer (PC) ausgeführt werden, welcher beispielsweise auch an den die zentrale Steuerung und die untergeordnete Steuerung verbindenden Feldbus angeschlossen ist.

Nachdem in dem Engineering-Tool die Programmierung der untergeordneten Steuerung direkt vorliegen kann, kann das Engineering-Tool die Gerätebeschreibung direkt aus dieser Programmierung erzeugen.

Gemäß einer weiteren vorteilhaften Ausführungsform wird die Gerätebeschreibung in ein Projektierungstool für die zentrale Steuerung eingebunden. Zum Verwenden der Syntax wird folglich zunächst die Gerätebeschreibung in das Projektierungstool geladen. Das Projektierungstool kann insbesondere von einem Fremdhersteller stammen, wobei es sich zum Beispiel um Programme wie TIA Portal von Siemens oder PC WORX von Phoenix Contact handeln kann. Hierbei ist von Vorteil, dass die Gerätebeschreibung herstellerübergreifend verwendbar wird. Zum Einbinden der Gerätebeschreibung in das Projektierungstool kann insbesondere die vorstehend genannte Gerätebeschreibungsdatei an das Projektierungstool übertragen werden.

Gemäß einer weiteren vorteilhaften Ausführungsform überprüft die zentrale Steuerung zumindest ein von der untergeordneten Steuerung empfangenes Prozessdatenabbild dahingehend, ob die in der Gerätebeschreibung enthaltene Syntax eingehalten wird, und gibt bei einem Verstoß gegen die Syntax ein Warnsignal aus. Dies bedeutet, dass die zentrale Steuerung eingerichtet ist zu erkennen, ob die in der Gerätebeschreibung enthaltene Syntax tatsächlich auch von der untergeordneten Steuerung verwendet wird. Ist dies nicht der Fall, beispielsweise beim Vertauschen von verschiedenen übermittelten Variablen, so kann davon ausgegangen werden, dass eine andere/neue Programmierung auf der untergeordneten Steuerung vorliegt. In einem solchen Fall kann dann ein Warnsignal ausgegeben werden, welches z.B. eine Industrieanlage stoppt. Hierdurch kann eine erhöhte Prozesssicherheit erreicht werden, die z.B. eine falsche Interpretation von Daten innerhalb des Prozessdatenabbilds verhindert.

Gemäß einer weiteren vorteilhaften Ausführungsform ist die untergeordnete Steuerung mit einer zweiten untergeordneten Steuerung mittels einer weiteren Feldbusverbindung gekoppelt, wobei die untergeordnete Steuerung gegenüber der zweiten untergeordneten Steuerung als zentrale Steuerung agiert, wobei
- die zweite untergeordnete Steuerung programmiert wird, wobei die Programmierung die zweite untergeordnete Steuerung zur Ausgabe eines von der Programmierung abhängigen zweiten Prozessdatenabbilds veranlasst,
- eine zweite Gerätebeschreibung der zweiten untergeordneten Steuerung generiert wird, wobei die zweite Gerätebeschreibung eine zweite Syntax des zweiten Prozessdatenabbilds umfasst,
- die zweite Syntax verwendet wird, um mittels der untergeordneten Steuerung das zweite Prozessdatenabbild zu verarbeiten.

Das hierin beschriebene Verfahren kann folglich auch "geschichtet" eingesetzt werden, so dass die Erläuterungen zum Vorgehen zwischen der zentralen Steuerung und der untergeordneten Steuerung auch für das Vorgehen zwischen der untergeordneten Steuerung und der zweiten untergeordneten Steuerung gelten. Hierbei ist nur als Unterschied zu beachten, dass die untergeordnete Steuerung dann als "zentrale Steuerung" und die zweite untergeordnete Steuerung als "untergeordnete Steuerung" fungiert. Die untergeordnete Steuerung kann dabei "doppelt" genutzt werden und sowohl als untergeordnete Steuerung für die zentrale Steuerung aber auch gleichzeitig als zentrale Steuerung für die zweite untergeordnete Steuerung eingesetzt werden.

Die "weitere Feldbusverbindung" kann dabei denselben Feldbus bezeichnen, wie er zwischen zentraler Steuerung und untergeordneter Steuerung verwendet wird. Aber auch die Verwendung eines anderen Feldbusses bzw. Feldbusprotokolls ist möglich.

Auch betrifft die Erfindung ein System, welches eine zentrale Steuerung und eine untergeordnete Steuerung umfasst. Das System ist zur Durchführung des hierin beschriebenen Verfahrens ausgebildet.

Weiterer Gegenstand der Erfindung ist eine Verarbeitungsmaschine zur Verarbeitung von Werkstücken gemäß Anspruch 11.

Bei der Verarbeitungsmaschine kann es sich z.B. um eine Produktionsstraße, eine Paketsortieranlage und dergleichen handeln. Die untergeordnete Steuerung kann dabei mit mehreren Sensoren, Aktoren und/oder Schaltern und dergleichen gekoppelt sein. Die Daten der Sensoren, Aktoren und/oder Schalter werden dabei von der untergeordneten Steuerung über die Feldbusverbindung an die zentrale Steuerung übermittelt. Die derart übermittelten Daten werden in dem Prozessdatenabbild übermittelt und sind anhand der Syntax beschrieben.

Die vorstehenden Erläuterungen zu dem erfindungsgemäßen Verfahren gelten entsprechend für die erfindungsgemäße Verarbeitungsmaschine. Dies gilt insbesondere für Vorteile und bevorzugte Ausführungsformen.

Nachfolgend wird die Erfindung rein beispielhaft unter Bezugnahme auf die Zeichnungen beschrieben. Es zeigen:
- Fig. 1: schematisch den Aufbau einer Verarbeitungsmaschine; und
- Fig. 2: schematisch den Aufbau eines Feldbus-Datagramms.

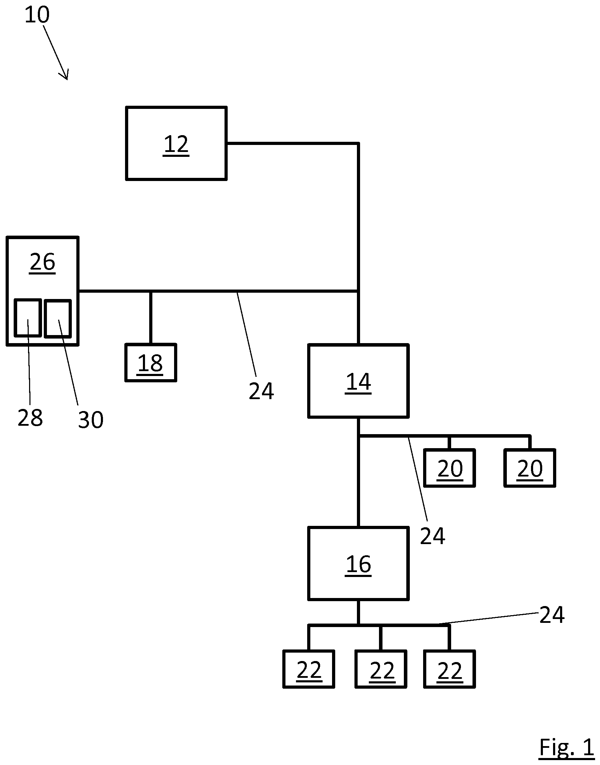

Fig. 1 zeigt schematisch eine Verarbeitungsmaschine 10, welche (nicht gezeigte) Pakete mittels eines (nicht gezeigten) Förderbands sortiert.

Die Verarbeitungsmaschine 10 umfasst eine erste speicherprogrammierbare Steuerung (SPS) 12, eine zweite SPS 14 und eine dritte SPS 16. Die erste SPS 12 fungiert als zentrale Steuerung, die zweite SPS 14 als erste untergeordnete Steuerung und die dritte SPS 16 als zweite untergeordnete Steuerung.

An die erste SPS 12 ist ein Feldgerät angeschlossen und zwar ein Temperatursensor 18. An die zweite SPS 14 sind sowohl die dritte SPS 16 als auch zwei Aktoren 20 (z.B. Servo-Motor-Treiber) angeschlossen. An die dritte SPS 16 wiederum sind drei Sensoren 22 (z.B. Schalter) angeschlossen.

Die Steuerungen 12, 14, 16 und die Sensoren 18, 22 und die Aktoren 20 sind jeweils mittels eines Feldbusses 24 miteinander verbunden. An den Feldbus 24 ist zudem ein Engineering-System 26 angeschlossen, welches ein Engineering-Tool ausführt.

Die Verarbeitungsmaschine 10 ist nun eingerichtet, mittels des Engineering-Tools die zweite SPS 14 zu programmieren. Aus der vorgenommenen Programmierung der zweiten SPS 14 wird dann eine erste Gerätebeschreibung 28 generiert, die angibt, wie die zweite SPS 14 Prozessdaten an die erste SPS 12 übermittelt. Hierzu umfasst die Gerätebeschreibung eine Syntax des Prozessdatenabbilds.

Die erste Gerätebeschreibung 28 kann dann der ersten SPS 12 zur Verfügung gestellt werden, um es der ersten SPS 12 zu ermöglichen, von der zweiten SPS 14 empfangene Prozessdatenabbilder zu verarbeiten.

In entsprechender Weise kann das Engineering-Tool eine Programmierung der dritten SPS 16 vornehmen, wobei aus der Programmierung der dritten SPS 16 eine zweite Gerätebeschreibung 30 generiert wird, welche wiederum eine Syntax des Prozessdatenabbilds umfasst, welches die dritte SPS 16 verwendet, um Prozessdaten an die zweite SPS 14 zu übermitteln.

Die zweite Gerätebeschreibung 30 kann dann von der zweiten SPS 14 verwendet werden, um die von der dritten SPS 16 empfangenen Prozessdatenabbilder zu verarbeiten.

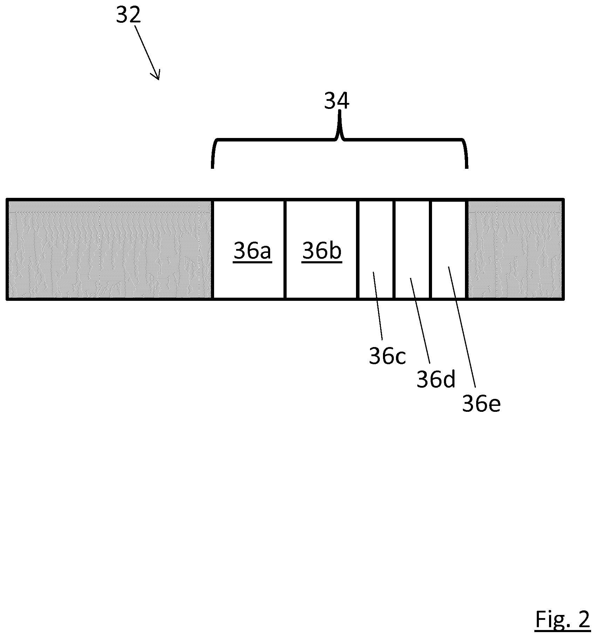

Die Prozessdatenabbilder können mittels Datagrammen 32 über den Feldbus 24 übermittelt werden. Ein beispielhaftes Datagramm 32 ist in Fig. 2 gezeigt. Das Datagramm 32 umfasst neben nicht näher erläuterten Komponenten (z.B. Header oder Checksummen) das Prozessdatenabbild 34. Das Prozessdatenabbild 34 wird von mehreren Variablen 36a bis 36e gebildet. Beispielsweise kann es sich bei den Variablen 36a und 36b um Variablen des Typs WORD handeln, die jeweils einen aktuellen Betriebszustand der Aktoren 20 angeben. Bei den Variablen 36c, 36d und 36e kann es sich hingegen um Integerwerte handeln, die den jeweiligen Schaltzustand der Sensoren 22 übermitteln.

Das in Fig. 2 dargestellte Datagramm 32 kann also beispielsweise dazu verwendet werden, von der zweiten SPS 14 das vorliegende Prozessdatenabbild 34 an die erste SPS 12 zu übertragen.

Im Betrieb der Verarbeitungsmaschine 10 übersendet wiederholt die dritte SPS 16 ein Prozessdatenabbild 34, welches Prozessdaten zu den Sensoren 22 enthält, an die zweite SPS 14. Die zweite SPS 14 verarbeitet die von der dritten SPS 16 empfangenen Prozessdaten unter Zuhilfenahme der zweiten Gerätebeschreibung 30 weiter und fügt dem Prozessdatenabbild 34 noch Informationen über die Aktoren 20 hinzu. Die zweite SPS 14 sendet dann wiederholt Datagramme 32 an die erste SPS 12, wobei die erste SPS 12 die erste Gerätebeschreibung 28 verwendet, um die Datagramme 32 der zweiten SPS 14 korrekt zu verarbeiten. Aufgrund der der ersten SPS 12 somit zur Verfügung stehenden Prozessdaten der Aktoren 20 und Sensoren 22 kann die erste SPS 12 eine Steuerung der Verarbeitungsmaschine 10 vornehmen.

Auch bei einer Veränderung der Verarbeitungsmaschine 10, beispielsweise bei einem Austausch eines Aktors 20 durch einen anderen Aktor und einer damit einhergehenden Veränderung der Programmierung der zweiten SPS 14, würde die erste Gerätebeschreibung 28 an die geänderte Programmierung der zweiten SPS 14 angepasst, wodurch die erste SPS 12 wiederum in die Lage versetzt wird, dann eventuell geänderte Prozessdatenabbilder 34 weiterhin korrekt zu verarbeiten. Eine solche Änderung kann weitgehend oder gar vollständig automatisch ablaufen, so dass Abschaltzeiten der Verarbeitungsmaschine 10 reduziert werden können. Zudem wird die Prozesssicherheit durch die korrekte Verarbeitung des jeweiligen Prozessdatenbilds 34 erhöht.

### Bezugszeichenliste

- 10: Verarbeitungsmaschine
- 12: erste SPS
- 14: zweite SPS
- 16: dritte SPS
- 18: Temperatursensor
- 20: Aktor
- 22: Sensor
- 24: Feldbus
- 26: Engineering-System
- 28: erste Gerätebeschreibung
- 30: zweite Gerätebeschreibung
- 32: Datagramm
- 34: Prozessdatenabbild
- 36a-36e: Variable

## Patentansprüche

1. Verfahren, mit den Schritten
- Koppeln einer zentralen Steuerung (12), insbesondere einer ersten speicherprogrammierbaren Steuerung (SPS), mit einer untergeordneten Steuerung (14), insbesondere einer zweiten SPS, mittels einer Feldbusverbindung (24),
**gekennzeichnet, durch**
- Programmieren der untergeordneten Steuerung (14), wobei die Programmierung die untergeordnete Steuerung (14) zur Ausgabe eines von der Programmierung abhängigen Prozessdatenabbilds (34) veranlasst, welches die untergeordnete Steuerung (14) verwendet, um Prozessdaten an die zentrale Steuerung (12) zu übermitteln,
- automatisches oder zumindest teilweise automatisches Generieren einer Gerätebeschreibung (28) der untergeordneten Steuerung (14) basierend auf der Programmierung der untergeordneten Steuerung (14), wobei die Gerätebeschreibung (28) eine Syntax des Prozessdatenabbilds (34) umfasst,
- Übermitteln des Prozessdatenabbilds (34) von der untergeordneten Steuerung (14) an die zentrale Steuerung (12),
- Übermitteln der generierten Gerätebeschreibung (28) von der untergeordneten Steuerung (14) an die zentrale Steuerung (12),
- Verwenden der Syntax, um die Programmierung der zentralen Steuerung (12) automatisch oder teilweise automatisiert an die Syntax des Prozessdatenabbilds (34) anzupassen, um mittels der zentralen Steuerung (12) das Prozessdatenabbild (34) zu verarbeiten.

2. Verfahren nach Anspruch 1,
**dadurch gekennzeichnet, dass**
die Syntax des Prozessdatenabbilds (34) die Position und/oder den Namen und/oder den Typ von in dem Prozessdatenabbild (34) enthaltenen Variablen (36a-36e) umfasst.

3. Verfahren nach Anspruch 1 oder 2,
**dadurch gekennzeichnet, dass**
die Gerätebeschreibung (28) in einer Gerätebeschreibungsdatei gespeichert und übertragen wird, wobei die Gerätebeschreibungsdatei beispielsweise eine GDSML-Datei, eine EDS-Datei, eine ESI-Datei oder eine GSD-Datei ist.

4. Verfahren nach zumindest einem der vorstehenden Ansprüche,
**dadurch gekennzeichnet, dass**
die untergeordnete Steuerung (14) eine SPS im Slave-Betrieb, ein programmierbares Gateway, einen programmierbaren Sensor und/oder einen Industrie-PC mit einer Feldbusschnittstelle umfasst.

5. Verfahren nach zumindest einem der vorstehenden Ansprüche,
**dadurch gekennzeichnet, dass**
die Gerätebeschreibung (28) nach einer Änderung der Programmierung der untergeordneten Steuerung (14) neu erzeugt wird.

6. Verfahren nach zumindest einem der vorstehenden Ansprüche,
**dadurch gekennzeichnet, dass**
das Generieren der Gerätebeschreibung (28) mittels eines Engineering-Tools durchgeführt wird, welches bevorzugt auf einem an den Feldbus (24) angeschlossenen Engineering-System (26) ausgeführt wird.

7. Verfahren nach zumindest einem der vorstehenden Ansprüche,
**dadurch gekennzeichnet, dass**
die Gerätebeschreibung (28) in ein Projektierungstool für die zentrale Steuerung (12) eingebunden wird.

8. Verfahren nach zumindest einem der vorstehenden Ansprüche,
**dadurch gekennzeichnet, dass**
die zentrale Steuerung (12) zumindest ein von der untergeordneten Steuerung (14) empfangenes Prozessdatenabbild (34) dahingehend überprüft, ob die in der Gerätebeschreibung (28) enthaltene Syntax eingehalten wird, und bei einem Verstoß gegen die Syntax ein Warnsignal ausgibt.

9. Verfahren nach zumindest einem der vorstehenden Ansprüche,
**dadurch gekennzeichnet, dass**
die untergeordnete Steuerung (14) mit einer zweiten untergeordneten Steuerung (16) mittels einer weiteren Feldbusverbindung (24) gekoppelt ist, wobei die untergeordnete Steuerung (14) gegenüber der zweiten untergeordneten Steuerung (16) als zentrale Steuerung agiert, wobei
- die zweite untergeordnete Steuerung (16) programmiert wird, wobei die Programmierung die zweite untergeordnete Steuerung (16) zur Ausgabe eines von der Programmierung abhängigen zweiten Prozessdatenabbilds (34) veranlasst,
- eine zweite Gerätebeschreibung (30) der zweiten untergeordneten Steuerung (16) generiert wird, wobei die zweite Gerätebeschreibung (30) eine zweite Syntax des zweiten Prozessdatenabbilds (34) umfasst,
- die zweite Syntax verwendet wird, um mittels der untergeordneten Steuerung (14) das zweite Prozessdatenabbild (34) zu verarbeiten.

10. System umfassend eine zentrale Steuerung (12) und eine untergeordnete Steuerung (14), wobei das System zur Durchführung des Verfahrens gemäß zumindest einem der Ansprüche 1 bis 9 ausgebildet ist.

11. Verarbeitungsmaschine (10) zur Verarbeitung von Werkstücken, umfassend eine zentrale Steuerung (12), insbesondere eine erste speicherprogrammierbare Steuerung (SPS), welche mit einer untergeordneten Steuerung (14), insbesondere einer zweiten SPS, mittels einer Feldbusverbindung (24) gekoppelt ist,
**dadurch gekennzeichnet, dass**
die Verarbeitungsmaschine (10) eingerichtet ist,
- aus einer Programmierung der untergeordneten Steuerung (14), welche die untergeordnete Steuerung (14) zur Ausgabe eines von der Programmierung abhängigen Prozessdatenabbilds (34) veranlasst, automatisch oder zumindest teilweise automatisch eine Gerätebeschreibung (28) der untergeordneten Steuerung (14) basierend auf der Programmierung der untergeordneten Steuerung (14) zu generieren, wobei die untergeordnete Steuerung (14) das Prozessdatenabbild (34) verwendet, um Prozessdaten an die zentrale Steuerung (12) zu übermitteln, wobei die Gerätebeschreibung (28) eine Syntax des Prozessdatenabbilds (34) umfasst, und wobei die Verarbeitungsmaschine (10) eingerichtet ist,
- das Prozessdatenabbild (34) von der untergeordneten Steuerung (14) an die zentrale Steuerung (12) zu übermitteln,
- die generierte Gerätebeschreibung (28) von der untergeordneten Steuerung (14) an die zentrale Steuerung (12) zu übermitteln,
- die Syntax zu verwenden, um die Programmierung der zentralen Steuerung (12) automatisch oder teilweise automatisiert an die Syntax des Prozessdatenabbilds (34) anzupassen, um mittels der zentralen Steuerung (12) das Prozessdatenabbild (34) zu verarbeiten.

## Claims

1. A method comprising the steps
- coupling a central controller (12), in particular a first programmable logic controller (PLC), to a subordinate controller (14), in particular to a second PLC, by means of a field bus connection (24),
**characterized by**
- programming the subordinate controller (14), with the programming causing the subordinate controller (14) to output a process data image (34) which is dependent on the programming and which the subordinate controller (14) uses to transmit process data to the central controller (12);
- automatically or at least partly automatically generating a device description (28) of the subordinate controller (14) based on the programming of the subordinate controller (14), with the device description (28) comprising a syntax of the process data image (34);
- transmitting the process data image (34) from the subordinate controller (14) to the central controller (12);
- transmitting the generated device description (28) from the subordinate controller (14) to the central controller (12); and
- using the syntax to adapt the programming of the central controller (12) to the syntax of the process data image (34) in an automatic or partly automated manner in order to process the process data image (34) by means of the central controller (12).

2. A method in accordance with claim 1,
**characterized in that**
the syntax of the process data image (34) comprises the position and/or the name and/or the type of variables (36a-36e) contained in the process data image (34).

3. A method in accordance with claim 1 or claim 2,
**characterized in that**
the device description (28) is stored and transmitted in a device description file, with the device description file, for example, being a GDSML file, an EDS file, an ESI file or a GSD file.

4. A method in accordance with at least one of the preceding claims,
**characterized in that**
the subordinate controller (14) comprises a PLC in slave operation; a programmable gateway; a programmable sensor; and/or an industrial PC having a field bus interface.

5. A method in accordance with at least one of the preceding claims,
**characterized in that**
the device description (28) is produced again after a change to the programming of the subordinate controller (14).

6. A method in accordance with at least one of the preceding claims,
**characterized in that**
the generation of the device description (28) is performed by means of an engineering tool which is preferably executed on an engineering system (26) connected to the field bus (24).

7. A method in accordance with at least one of the preceding claims,
**characterized in that**
the device description (28) is integrated in a project planning tool for the central controller (12).

8. A method in accordance with at least one of the preceding claims,
**characterized in that**
the central controller (12) checks at least one process data image (34) received from the subordinate controller (14) as to whether the syntax contained in the device description (28) is observed and outputs a warning signal in the event of a violation of the syntax.

9. A method in accordance with at least one of the preceding claims,
**characterized in that**
the subordinate controller (14) is coupled to a second subordinate controller (16) by means of a further field bus connection (24), with the subordinate controller (14) acting as a central controller with respect to the second subordinate controller (16), wherein
- the second subordinate controller (16) is programmed, with the programming causing the second subordinate controller (16) to output a second process data image (34) dependent on the programming;
- a second device description (30) of the second subordinate controller (16) is generated, with the second device description (30) comprising a second syntax of the second process data image (34); and
- the second syntax is used to process the second process data image (34) by means of the subordinate controller (14).

10. A system comprising a central controller (12) and a subordinate controller (14), wherein the system is configured to perform the method in accordance with at least one of the claims 1 to 9.

11. A processing machine (10) for processing workpieces, comprising a central controller (12), in particular a first programmable logic controller (PLC), which is coupled to a subordinate controller (14), in particular to a second PLC, by means of a field bus connection (24),
**characterized in that**
the processing machine (10) is configured
- to automatically or partly automatically generate, from a programming of the subordinate controller (14) which causes the subordinate controller (14) to output a process data image (34) dependent on the programming, a device description (28) of the subordinate controller (14) based on the programming of the subordinate controller (14), with the subordinate controller (14) using the process data image (34) to transmit process data to the central controller (12), with the device description (28) comprising a syntax of the process data image (34), and with the processing machine (10) being configured
- to transmit the process data image (34) from the subordinate controller (14) to the central controller (12);
- to transmit the generated device description (28) from the subordinate controller (14) to the central controller (12); and
- to use the syntax to adapt the programming of the central controller (12) to the syntax of the process data image (34) in an automatic or partly automated manner in order to process the process data image (34) by means of the central controller (12).

## Revendications

1. Procédé comprenant les étapes consistant à :
- coupler une commande centrale (12), en particulier un premier automate programmable industriel (API), avec une commande subordonnée (14), en particulier un second API, au moyen d'une connexion par bus de terrain (24),
**caractérisé par** les étapes consistant à :
- programmer la commande subordonnée (14), la programmation incitant la commande subordonnée (14) à émettre une image de données de processus (34) dépendante de la programmation, image que la commande subordonnée (14) utilise pour transmettre des données de processus à la commande centrale (12),
- générer automatiquement ou au moins partiellement automatiquement une description d'appareil (28) de la commande subordonnée (14) en se basant sur la programmation de la commande subordonnée (14), la description d'appareil (28) comprenant une syntaxe de l'image de données de processus (34),
- transférer l'image de données de processus (34) de la commande subordonnée (14) à la commande centrale (12),
- transférer la description d'appareil générée (28) de la commande subordonnée (14) à la commande centrale (12),
- utiliser la syntaxe pour adapter automatiquement ou de façon partiellement automatisée la programmation de la commande centrale (12) à la syntaxe de l'image de données de processus (34) afin de traiter l'image de données de processus (34) au moyen de la commande centrale (12).

2. Procédé selon la revendication 1,
**caractérisé en ce que**
la syntaxe de l'image de données de processus (34) comprend la position et/ou le nom et/ou le type de variables (36a - 36e) contenues dans l'image de données de processus (34).

3. Procédé selon la revendication 1 ou 2,
**caractérisé en ce que**
la description d'appareil (28) est stockée et transmise dans un fichier de description d'appareil, le fichier de description d'appareil étant par exemple un fichier GDSML, un fichier EDS, un fichier ESI ou un fichier GSD.

4. Procédé selon l'une au moins des revendications précédentes,
**caractérisé en ce que**
la commande subordonnée (14) comprend un API en mode esclave, une passerelle programmable, un capteur programmable et/ou un PC industriel avec une interface de bus de terrain.

5. Procédé selon l'une au moins des revendications précédentes,
**caractérisé en ce que**
la description d'appareil (28) est régénérée après une modification de la programmation de la commande subordonnée (14).

6. Procédé selon l'une au moins des revendications précédentes,
**caractérisé en ce que**
la génération de la description d'appareil (28) est réalisée à l'aide d'un outil d'ingénierie qui est de préférence exécuté sur un système d'ingénierie (26) connecté au bus de terrain (24).

7. Procédé selon l'une au moins des revendications précédentes,
**caractérisé en ce que**
la description d'appareil (28) est intégrée dans un outil de configuration pour la commande centrale (12).

8. Procédé selon l'une au moins des revendications précédentes,
**caractérisé en ce que**
la commande centrale (12) vérifie au moins une image de données de processus (34) reçue de la commande subordonnée (14) pour savoir si la syntaxe contenue dans la description d'appareil (28) est respectée, et elle émet un signal d'avertissement en cas de violation de la syntaxe.

9. Procédé selon l'une au moins des revendications précédentes,
**caractérisé en ce que**
la commande subordonnée (14) est couplée à une seconde commande subordonnée (16) au moyen d'une autre connexion par bus de terrain (24), la commande subordonnée (14) faisant office de commande centrale par rapport à la seconde commande subordonnée (16), et
- la seconde commande subordonnée (16) est programmée, la programmation incitant la seconde commande subordonnée (16) à émettre une seconde image de données de processus (34) dépendante de la programmation,
- une seconde description d'appareil (30) de la seconde commande subordonnée (16) est générée, la seconde description d'appareil (30) comprenant une seconde syntaxe de la seconde image de données de processus (34),
- la seconde syntaxe est utilisée pour traiter la seconde image de données de processus (34) au moyen de la commande subordonnée (14).

10. Système comprenant une commande centrale (12) et une commande subordonnée (14), le système étant réalisé pour mettre en œuvre le procédé selon l'une au moins des revendications 1 à 9.

11. Machine d'usinage (10) pour l'usinage de pièces, comprenant une commande centrale (12), en particulier un premier automate programmable industriel (API), qui est couplé(e) avec une commande subordonnée (14), en particulier avec un second API, au moyen d'une connexion par bus de terrain (24),
**caractérisée en ce que**
la machine d'usinage (10) est conçue pour
- sur la base d'une programmation de la commande subordonnée (14) qui incite la commande subordonnée (14) à émettre une image de données de processus (34) dépendante de la programmation, générer automatiquement ou au moins partiellement automatiquement une description d'appareil (28) de la commande subordonnée (14) en se basant sur la programmation de la commande subordonnée (14), la commande subordonnée (14) utilisant l'image de données de processus (34) pour transférer des données de processus à la commande centrale (12), la description d'appareil (28) comprenant une syntaxe de l'image de données de processus (34),
et la machine d'usinage (10) est conçue pour
- transférer l'image de données de processus (34) de la commande subordonnée (14) à la commande centrale (12),
- transférer la description d'appareil générée (28) de la commande subordonnée (14) à la commande centrale (12),
- utiliser la syntaxe pour adapter automatiquement ou de façon partiellement automatisée la programmation de la commande centrale (12) à la syntaxe de l'image de données de processus (34) afin de traiter l'image de données de processus (34) au moyen de la commande centrale (12).
